# EUROPEAN PATENT APPLICATION

(11) **EP 4 847 988 A1**
(43) Date of publication of application: **02.12.2026**
(21) Application number: 25382558.2
(22) Date of filing: 30.05.2025
(51) Int. Cl.: G02F 1/01, G02F 1/313, H04Q 11/00

(54) **ELECTRICALLY CONTROLLED PHOTONIC INTEGRATED CIRCUIT**

(71) Applicant: IPronics Programmable Photonics S.L., 46010 València (ES)
(72) Inventor: Torrijos-Morán, Luis, València (ES); Pérez-López, Daniel, València (ES); Ponce-Tortajada, Rubén, València (ES); Manglano-Bermejo, Maria, València (ES)
(74) Representative: Barker Brettell LLP

(57) **Abstract**

A photonic integrated circuit, comprising electrically operated optical elements and a drive electrical signal path. Each electrically operated optical element is operable to vary a transmission, reflection and/or absorption property of an optical path through the electrically operated optical element in response to an electrical signal received by the electrically operated optical element. The drive electrical signal path is connected to a plurality of the electrically operated optical elements and arranged so that an electrical signal applied to the drive electrical signal path will operate each of the plurality of the electrically operated optical elements.

## Description

### Field of the Invention

The present invention relates to a photonic integrated circuit, and more particularly to electrical addressing of electrically controlled elements of a photonic integrated circuit.

### Background to the Invention

Photonic Integrated Circuits (PICs) are increasingly recognized as a key solution for optical interconnects in applications such as data centers and networking. The rising complexity of PICs serving as optical circuit switches (OCS) with a large number of ports presents significant challenges, particularly in efficiently managing their electrical drive requirements.

Large-scale Photonic Integrated Circuits (PICs) with many (e.g. thousands) of photonic actuators typically demand an equivalent number of electrical I/O signals, necessitating advanced packaging solutions. The conventional approach for driving a PIC involves assigning a dedicated electrical signal to each photonic actuator. While effective, this method severely limits scalability and adds significant complexity. To address this, some solutions have been proposed that reduce I/O requirements through time-multiplexing schemes and selective channel switching, enabling a single electrical signal to drive multiple photonic actuators.

Zanetto, Francesco, et al. "Time-multiplexed control of programmable silicon photonic circuits enabled by monolithic CMOS electronics. " Laser & Photonics Reviews 17.11 (2023): 2300124 discloses time-multiplexed control of thermal phase shifters.

Ribeiro, Antonio, et al. "Column-row addressing of thermo-optic phase shifters for controlling large silicon photonic circuits. " IEEE Journal of Selected Topics in Quantum Electronics 26.5 (2020): 1-8 teaches a time-multiplexed row-column addressing scheme to drive thermo-optic phase shifters.

Ribeiro, Antonio, and Wim Bogaerts. "Digitally controlled multiplexed silicon photonics phase shifter using heaters with integrated diodes. " Optics Express 25.24 (2017): 29778-29787 discloses multiplexed control of a silicon side heater with an integrated diode to provide multiplexed control of different elements in a photonic circuit based on the polarity of the driving signal.

SM Fatemi, A Khachaturian, B Abiri, SA Hajimiri - US Patent 10,942,273, 2021 discloses time-multiplexed control of an optical phase array to direct the optical beam of light.

These previously proposed techniques often rely on additional electronic components, such as diodes or transistors, which complicate the driving system and increase overall system complexity.

A solution, or an amelioration, of at least some of these problems is desirable.

### Summary of Invention

According to a first aspect of the invention, there is provided a photonic integrated circuit, comprising:
electrically operated optical elements, each electrically operated optical element operable to vary a transmission, reflection or absorption property of an optical path through the electrically operated optical element in response to an electrical signal received by the electrically operated optical element;
a drive electrical signal path connected to a plurality of the electrically operated optical elements and arranged so that an electrical signal applied to the drive electrical signal path will simultaneously be applied to each of the plurality of the electrically operated optical elements.

The invention may also be applicable more generally to any photonic system, for example a photonic integrated system. The drive electrical signal path enables the same electrical signal to be applied to each of the plurality of electrically operated optical elements at the same time, and reduces the number of electrical connections required to control the photonic integrated circuit. The varying of transmission, reflection or absorption properties, for example, include (but are not limited to) varying an amplitude change and/or a phase change imparted by the optical path.

Each of the plurality of electrically operated optical elements may be connected to a common electrical signal path. The drive electrical signal electrical path and common electrical signal path may be configured so that an electrical signal applied to the drive electrical signal path will cause:
i) current to flow between the drive electrical signal path and the common electrical signal path via the plurality of electrically operated optical elements; or
ii) a electric field to be applied across at least a portion of each of the plurality of electrically operated optical elements as a result of a first voltage on the drive electrical signal path and a second, different, voltage on the common electrical signal path.

The electrical signal may be a pulse width modulated signal, or any other type of signal.

The common electrical signal path may be connected to a ground (or to a fixed voltage serving as a local ground).

The drive electrical signal path and the common electrical signal path may connect the plurality of electrically operated optical elements in parallel.

The drive electrical signal path and the common electrical signal path may connect the plurality of electrically operated optical elements in series.

The photonic integrated circuit may comprise a plurality of optical switches, each of the plurality of optical switches comprising at least one of the plurality of electrically operated optical elements.

Each optical switch may comprise a Mach-Zehnder interferometer.

Each electrically operated element may comprise a thermo-optic phase shifter, an electro-optic phase shifter or an electromechanical phase shifter.

The plurality of electrically operated optical elements may be a first plurality of electrically operated optical elements. The electrical signal may be a first electrical signal. The drive electrical path may be a first drive electrical signal path. The photonic integrated circuit may further comprise a second drive electrical signal path connected to a second plurality of the electrically operated optical elements and arranged so that a second electrical signal applied to the second drive electrical signal path will be applied to each of the second plurality of the electrically operated optical elements.

There may be a plurality of drive electrical signal paths. The plurality of drive electrical signal paths may comprise the first drive electrical signal path and the second drive electrical signal path. Each of the plurality of drive electrical signal paths may operate a different set of at least one electrically operated optical elements.

The photonic integrated circuit may comprise a switching mesh comprising n input stages and *m* inputs, wherein:
the ith input stage of the binary-tree switching mesh comprises *m* × 2^{*i*-1} optical switches, each controlled by an electrically operated optical element;
each input stage of the binary-tree switching mesh comprises *m* drive electrical signal paths;
the ith input stage of the binary-tree switching mesh is configured so that each drive electrical signal path controls the operation of 2^{*i*-1} optical switches;
wherein i is counted upwards from 1 adjacent to the input.

The switching mesh may further comprise p output stages and *q* outputs, wherein:
the jth output stage of the binary-tree switching mesh comprises *q* × 2^{*j*-1} optical switches, each controlled by an electrically operated optical element;
each output stage of the binary-tree switching mesh comprises q electrical signal paths;
the jth output stage of the binary-tree switching mesh is configured so that each drive electrical signal path controls the operation of 2^{*j*-1} optical switches;
wherein j is counted upward from 1 adjacent to the output.

The switching mesh may be a binary tree network.

The switching mesh may be a banyan network. The switching mesh may be a double layer network.

According to a second aspect, there is provided a system comprising the photonic integrated circuit of the first aspect (including any optional features thereof) and a controller configured to:
receive an instruction comprising a desired routing,
identify a relevant switch and a desired state to produce the desired routing,
determine an electrical signal to be applied to the drive electrical signal path to produce the desired state in the relevant switch; and
apply the electrical signal to drive electrical signal path

The controller may be configured to determine the electrical signal with reference to a predetermined signal to produce the desired state in an electrically operated optical element that controls the state of the relevant switch.

The predetermined signal may comprise at least one of: a voltage, a current, a pulse width modulation (e.g. duty cycle, frequency etc), an amplitude modulation (e.g. an amplitude of a periodically repeating signal), or any other type of drive signal that controls the state of the electrically operated optical element.

According to a third aspect, there is provided a method of electrically controlling optical elements of a photonic integrated circuit, wherein the optical elements are operable to vary a transmission, reflection and/or absorption property of an optical path through the electrically operated optical element in response to an electrical signal received by the electrically operated optical element, the method comprising:
operating a plurality of the optical elements with a single electrical signal.

The varying of transmission, reflection or absorption properties, for example, include (but are not limited to) varying an amplitude change and/or a phase change imparted by the optical path to an optical signal that is propagating along the optical path.

The method may comprise:
receiving an instruction comprising a desired routing of an optical signal through the photonic integrated circuit;
identifying a relevant switch and a desired state for the relevant switch in order to achieve the desired routing;
determining an electrical signal to be applied to optical elements comprised in a group of switches that comprise the relevant switch to produce the desired state of the relevant switch,
applying the electrical signal to the optical elements to effect the desired state in the relevant switch.

There may be more than one relevant switch. There may be more than one group of switches. The electrical signal is applied to each of the switches

Features of each aspect can be used with any other aspect, including optional features, and features described with reference to specific embodiments. For example, the switching mesh may comprise a controller (or be part of a system comprising a controller). The controller may configured to: receive an instruction comprising a desired routing, identify a relevant switch and a desired state, determine an electrical signal to be applied to optical elements comprised in the group of switches comprising the relevant switch and to apply the electrical signal to the optical elements. The method may be performed using a switch fabric as described above and herein, including any of the optional features.

### Brief Description of the Drawings

**Figure 1** is an example photonic integrated circuit with an array of electrically operated optical elements;
**Figure 2** shows example electrically controlled optical switches;
**Figure 3** shows electrically controlled optical elements electrically connected in parallel to a drive electrical signal path and to ground;
**Figure 4** shows a 4x4 binary-tree switching mesh in which groups of optical switches are controlled by common electrical signals;
**Figure 5** shows an example method of controlling a switch fabric;
**Figure 6** shows an example routing of a single input of the 4x4 binary-tree switching of Figure 4;
**Figure 7** shows an 8x8 binary-tree switching mesh in which groups of optical switches are controlled by common electrical signals;
**Figure 8** shows a 4x4 dilated banyan switching architecture in which groups of optical switches are controlled by common electrical signals;
**Figure 9** shows an 8x8 dilated banyan switching architecture in which groups of optical switches are controlled by common electrical signals; and
**Figure 10** is a photonic integrated circuit layout showing an 8x8 dilated banyan switching architecture in which groups of optical switches are controlled by common electrical signals.

### Detailed Description

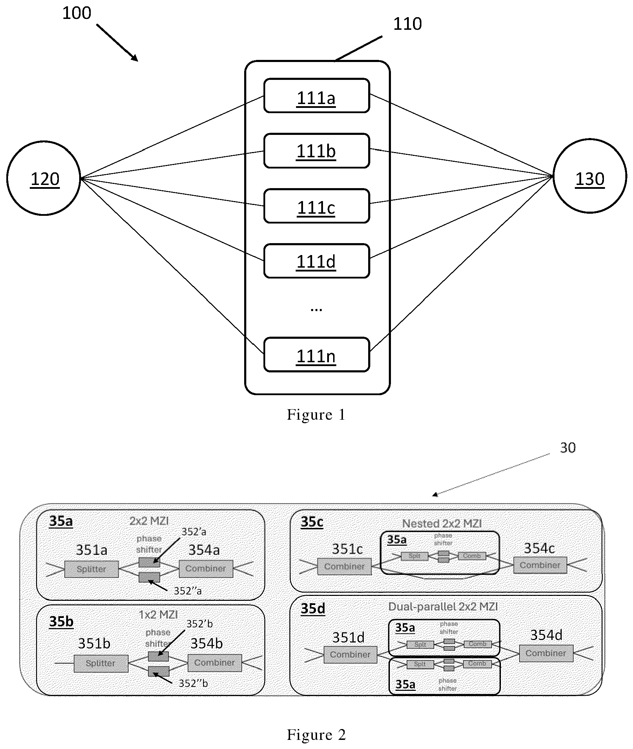

Figure 1 shows an example of a photonic integrated circuit 100, comprising an array (or group) 110 of n electrically operated optical elements 111a-n. Each of the electrically operated optical elements is connected to: a drive electrical signal path 120, and a common electrical signal path 130. The drive electrical path 120 and common electrical signal path 130 may comprise a contact pad, for example for use in a flip-chip ball grid array or similar packaging arrangement. The common electrical signal path 130 may be shared by other arrays of electrically operated optical elements (not shown).

An electrical signal on the drive electrical signal path will operate each of the electrically operated optical elements 111a-n. For example, the electrical signal may cause current to flow through a resistive load of each of the electrically operated optical elements 111a-n. The electrical signal may alternatively cause an electrical field in at least a portion of the electrically operated optical elements 111a-n. The electrical signal can be a modulated signal (e.g. pulse width modulated, amplitude modulated), distributed to each of the optical elements 110 via drive electrical path 120.

Each of the electrically operated optical elements 111a-n may be any sort of optical element that is responsive to an electrical signal. For example, the electrically operated optical elements may comprise one or more switches, phase shifters, polarisation controllers, tuneable beamsplitters, programmable unit cells and variable optical attenuators or optical amplifiers. In some examples, each of the electrically operated optical elements 111a-n comprises an optical switch. The electrically operated optical elements may, for example, comprise a waveguide region with optical properties that vary in response to the electrical signal. The optical properties may comprise refractive index. The variation may be a result of any mechanism, and may result from (for example): a change in temperature due to heating caused by the electrical signal, an electrical field due to from the electrical signal; and/or a change in concentration and/or distribution of charge carriers (which may arise due to an electric field and/or carrier injection).

Any optical switch in any of the examples described herein may comprise a Mach-Zehnder interferometer (MZI). Examples of such switches 30 are shown in Figure 2, comprising: 2x2 Mach-Zehnder interferometers (MZIs) 35a, 1x2 MZIs 35b, nested 2x2 MZIs 35c or dual-parallel 2x2 MZIs 35d. A 2x2 MZI 35a comprises a splitter 351a having two inputs and two outputs, two phase shifters 352' a and 352" a and a combiner 354a having two inputs and two outputs. Each of the splitter's outputs is connected to the respective phase shifter input and each of the phase shifter's outputs is connected to the respective input of the combiner 354a. A 1x2 MZI 35b is similar to the 2x2 MZI 35a, but the splitter 351b only has one input instead of two. A 2x1 MZI can be made by reversing the 1x2 MZI 35b. A nested MZI 35c is a 2x2 MZI 35a in which one of the inputs of the splitter 351a and one of the outputs of the combiner 354a are, respectively, coupled to an output and an input port of two other combiners 351c and 354c. A dual-parallel 2x2 MZI 35d is formed by two 2x2 MZIs 35a which receive, in parallel, optical signals from an "input" combiner 351d, and send, in parallel, said optical signals to an "output" combiner 354d. Several combinations of optical switches are possible, within the switching core.

In these examples, each leg of the MZI comprises a electrically operated element comprising a phase shifter. In order to operate an optical switch comprising the MZI, only one of the phase shifters needs to be operated (to control a phase difference between the different legs of the MZI). This phase shifter that is operated can be 352' a or 352" a in the 2x2 MZI, or it can be either the upper or the lower phase shifter of the 35a or 35b* in the dual-parallel 2x2 MZI. Furthermore, phase shifters may be operated by a single electrical signal through a suitable fixed biasing network e.g. voltage or current divider). In other examples, only a single phase shifter may be present in each optical switch.

The phase shifter may be any suitable electrically operated phase shifter, for example an electro-optic modulator (in which a change in electric field results in a change in refractive index in order to adjust an optical path length) or an thermo-optic modulator (in which a change in temperature arising from resistive heating results in a change in refractive index and in turn a change in optical path length). Additionally or alternatively, a switching effect can be obtained with electro-mechanical actuators, where the properties of an optical path is modified by a physical displacement of at least a portion of an element defining the optical path in response to an electrical signal (for example a voltage resulting in a specific actuation). For example, a waveguide may be physically displaced by an actuator in response to an electrical signal. A MEMS device may form part of the optical path. The MEMS device may displace (e.g. moving a mirror in a piston mode) to modulate an optical path length or phase. A MEMS device may rotate (e.g. a tilting mirror) to change a coupling between different waveguides.

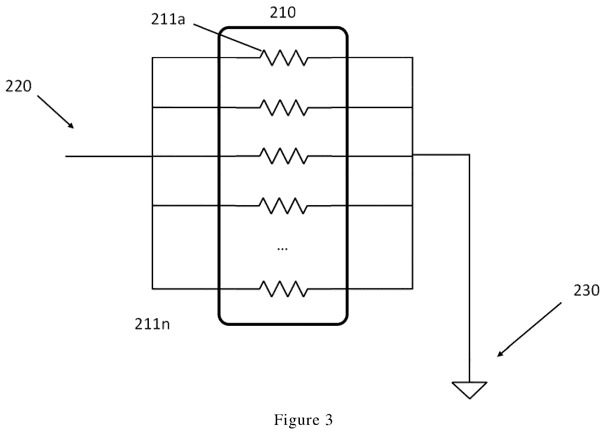

Figure 3 shows an example of a photonic integrated circuit 200, comprising an array (or group) 210 of n electrically operated optical elements 211a-n. Each of the electrically operated optical elements is connected to: a drive electrical signal path 220, and a common electrical signal path 230. The drive electrical path 220 is connected to a voltage or current source (e.g. a trace leading to a contact for receiving an electrical input). The common electrical signal path 230 is connected to ground (but may similarly be connected to a trace leading to a contact for connecting to ground or another suitable reference voltage). In this simple example, each of the optical elements 211a-n comprises an electrothermal optical modulator. The state of an optical switch comprising each optical modulator is in a first state when a first voltage or current is applied to the drive electrical path 220, and in a second (different) state when a second (different) voltage or current is applied to the drive electrical path 220. In a simple illustrative (but non-limiting) example, each switch may be in a cross state when no voltage is applied and there is no active heating of the optical elements, and each switch may be in a bar state when a specific signal (e.g. a predetermined voltage or current) is applied to the drive electrical path 220.

Any fabrication process will include process variations (including surface roughness, thickness and linewidth variations) from optical element to optical element, which may result in each optical element needing a different signal (voltage or current) to tune the switch comprising that optical element to either a bar state or a cross state. A photonic integrated circuit can be characterised after fabrication to determine the appropriate signals for each optical element/optical switch, and the electrical signal corresponding with each state (e.g. bar and cross) for each optical switch may be stored (in a machine readable medium such as a computer memory or storage device). When an electrical signal is applied to the drive electrical path 220, the electrical signal may be selected to tune a selected optical switch to a specific state. The effect of that electrical signal on the other optical elements may be to put those other optical switches into a state that is somewhere between a bar state and a cross state. As explained below with reference to specific mesh arrangements, this intermediate state of some switches receiving the electrical signal may be irrelevant to the overall functioning of the photonic integrated circuit.

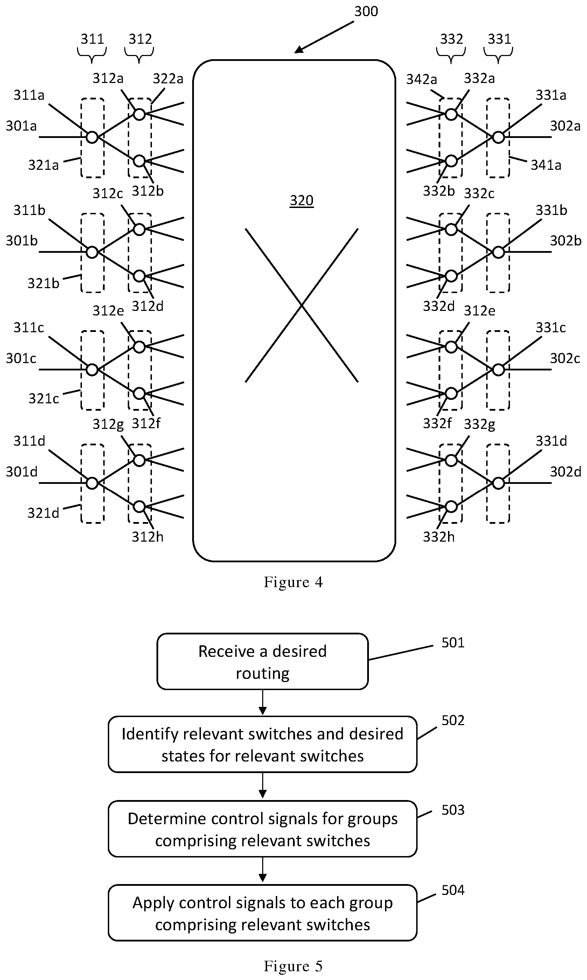

Referring to Figure 4, a photonic integrated circuit 300 is shown comprising a binary-tree switching mesh, which may be used for signal-sharing driving. The switching mesh comprises four optical inputs 301a-d, four optical outputs 302a-d, a first input stage 311, a second input stage 312, an interconnect 320, a first output stage 331 and a second output stage 332. For convenience in mirroring the description of the input stages for the output stages, the numbering of the output stages herein takes the stage connected to the outputs as the first output stage, and counts upwards towards the interconnect 320 (similar to the input stages, which count upwards from the inputs 301a-d to the interconnect 320).

The switching mesh 300 is operable to route each of the inputs 301a-d to a selected one of each of the outputs 302a-d. The switching mesh of Figure 4 is strictly non-blocking.

The first input stage 311 comprises a 1x2 optical switch 311a-d connected to each optical input 301a-d. Each of the optical switches 311a-d in the first input stage 311 is operable to route a respective input optical at optical input 301a-d to one of two optical switches in the second input stage 312.

For example, optical switch 311a is operable to route optical input 301a to optical switch 312a in a first state and to optical switch 312b in a second state. The state of optical switch 311a is set by an electrical signal. For example, no current through the optical switch 311a may result in the first state, and a predetermined current through the optical switch 311a may result in the second state. Each of the switches 311a-d in the first input stage 311 is similarly operable to route a respective input 301a-d to one of two switches in the second input stage 312.

Each of the switches 312a-b in the second input stage is operable to route optical signals received from the first input stage to one of two inputs of the interconnect 320. The switches in the second input stage 312a-h are grouped, with each group comprising switches that are controlled by the same electrical signal. Groups of switches in each stage of the switch 300 are enclosed in dotted outline (with each group comprising one or more switches that are controlled by the same electrical signal). Not all of these groups are labelled with a reference numeral, for clarity. The first input stage 311 comprises group 321a, consisting of a single optical switch 311a and the second stage 312 comprises group 324a, consisting of two optical switches 312a, 312b.

A signal on input 301a will be routed by optical switch 311a to one or the other of the optical switches 312a or 312b, and not to both at the same time. The state of a switch with no optical signal is irrelevant to the functioning of the overall switch fabric. In a switching fabric like this, groups of switches can be identified that can be switched with a common signal. In this example, groups of switches in each successive input stage can be identified that can only receive signal from a specific input, and these switches in each stage can be controlled using a common electrical signal. Similarly, groups of switches in output stages can be identified that can only connect to a specific output.

As noted above, the electrical signal that is applied to each group of optical switches may be selected to tune a selected one of the optical switches in that group to a selected state, based on a predetermined characterisation of the optical switches. The optical switches in the group that are not the selected optical switch may be tuned to an intermediate state by the electrical signal, but this does not matter because those non-selected optical switches will not be receiving an optical signal.

In this 4x4 switch fabric, there are two input stages and two output stages. The groups 321a, 341a in the first input stage 311 and the first output stage 331 each comprise one switch, and the groups 322a, 342a in the second input stage and the second output stage each comprise two switches. In general, in each successive stage the number of switches in each group doubles, so that the number of switches in a group in stage n is given by 2^{*n*-1}.

The interconnect 320 comprises fixed, passive, interconnections between the input stage and the output stage. The interconnect 320 does not require any driving signal to work. There are four outputs 323a-d from group 314a, which may each be respectively routed to a different group in the second output stage 332. In this example, each of outputs 323a-d are routed to 333a, 333e, 333i, 333m respectively. The same routing is applicable for each of the groups in the second stage 312 (e.g. with each of 323e-h respectively connected to 333b, 333f, 333j and 333n). Any fixed routing can be chosen for the interconnect 320 - this is merely an illustrative example.

The operation of the output stages 331, 332 mirrors that of the input stages 311, 312.

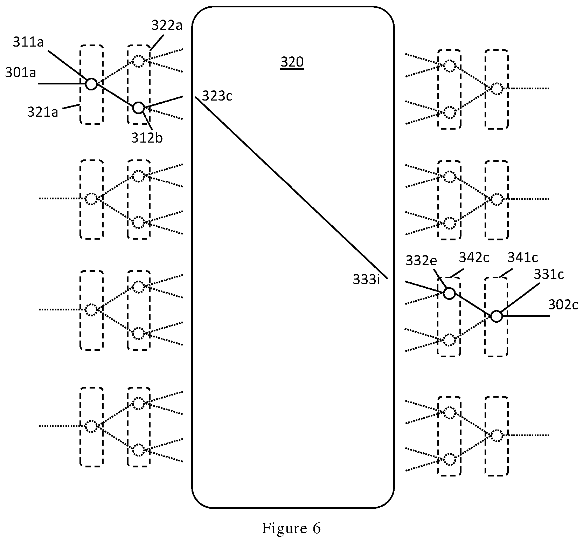

An example of control of the switch will be described, with reference to Figure 5 and Figure 6.

In a first step, 501, an instruction comprising a desired routing is received, which may specify to which output 302a-d each input 310a-d is to be routed. For example, the instruction may specify that input 301a is to be routed to output 302c.

In a second step, 502, the optical switches and their desired states are identified that can effect this routing, as shown in Figure 6 (in which non-relevant switches and routings for this instruction are shown in dotted lines). For the example instruction routing input 301a to output 302c, the switches 311a, 312b, 332e, and 331c are relevant, and their desired states are: cross, bar, bar, bar.

The groups comprising each relevant switch can be identified. The states of these switches can be controlled by four electrical signals applied to optical elements that tune each of those optical switches: a first electrical signal sent to group 321a, to select a cross state of switch 311a, a second electrical signal sent to group 322a, to select a bar state for switch 312b (with the state of the other switch in this group 322a left undefined and potentially intermediate between bar and cross), a third electrical signal sent to group 342c to select a bar state of switch 332e (with the state of the other swich in this group 342c left undefined and potentially intermediate between bar and cross), and a fourth electrical signal sent to group 341c to select a bar state of switch 331c.

In a third step, 503, the necessary electrical signals for each group is determined in order to effect the desired switch states in the relevant switches (e.g. from a lookup table stored in a computer memory indicating a required voltage and/or current for each optical element to select each of the states of each of the switches).

In a fourth step, 504, the determined electrical signals are applied to each group comprising the relevant switches, thereby selecting a routing from input 301a to output 302c.

Although a routing from a single input has been described, the process can be scaled for *n* inputs routing to *m* outputs.

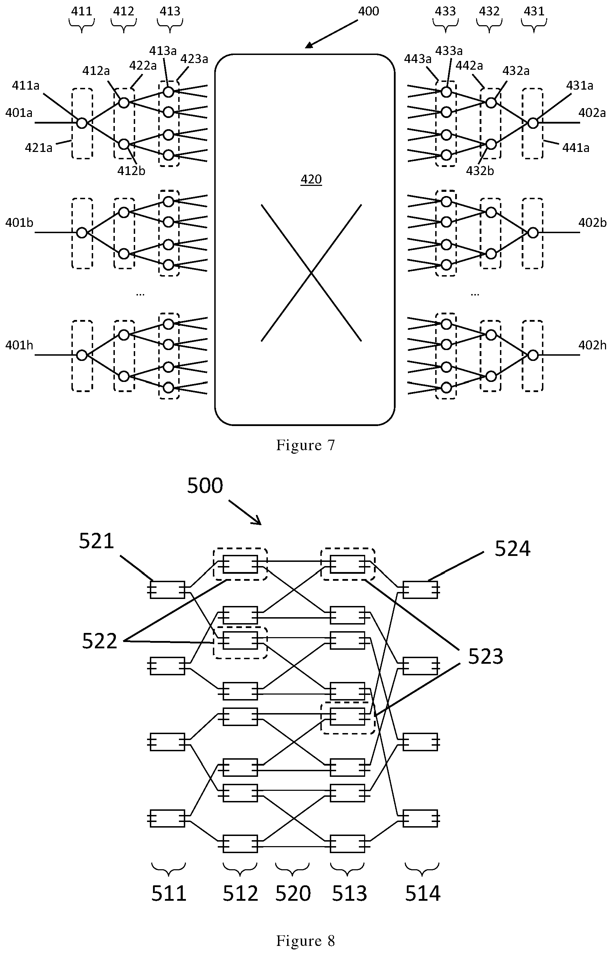

Figure 7 shows an example embodiment in which there are three input stages and three output stages, suitable for an 8x8 switching mesh. For clarity, not all the inputs and switches are shown. The switch comprises eight inputs 401a-h and eight outputs 402a-h.

The first two input stages are as described with reference to Figure 4, except that there are 8 inputs and correspondingly more switches and switch groups. The third input stage 413 comprises switch group 423a, in which each switch 413a is connected to input 401a, via group 422a in the second input stage and group 421a in the first input stage 411. Switch group 423a has four optical switches which are controlled by a single electrical signal, and 8 outputs. Each of the four optical switches in group 423a may respectively be connected by the interconnect to groups in the output stage associated with (i.e. connected to) each of the outputs 402a-h. Each switch group in the third input stage 413 has four switches controlled by a single electrical signal and eight connections to the interconnect 420.

The three output stages 431-433 mirror the operation of the input stages 411-413, with each group 443a in the third output stage 433 having eight connections to the interconnect 420 and comprising four optical switches 433a (not all of which are labelled for clarity). Each group in the second output stage 432 comprises two optical switches controlled by a single electrical signal. Each group in the first output electrical stage 431 comprises a single optical switch.

Figure 8 shows a binary-tree mesh 500, specifically a 4x4 dilated banyan network. The binary tree mesh 500 comprises a first stage 511, second stage 512, third stage 513 and fourth stage 514. The optical switches are configured as 1x2 switches in the first and second stage 511, 512 and as 2x1 optical switches in the third and fourth stages 514. Similar to the description of Figures 4 and 5, the first and second stages 511, 512 may be termed the first and second input stages, respectively; and the third and fourth stages 513, 514 may be termed the second and first output stages respectively.

The first stage 511 comprises four optical switches. The inputs to the mesh 500 are each connected to an input of a respective one of the optical switches in the first stage 511. In the second stage 512 there are eight switches. Each of the switches in the first stage is connected to two different switches in the second stage 512. Taking the top switch 521 in the first stage 511 as an example, this is connected to two different switches in the second stage 512. Only one of these two switches will receive an optical signal at a time, depending on the state of the switch 521 is either in a first state or a second state. The two switches that are connected to switch 521 therefore define switch group 522, which is under the control of a single electrical input. After the first two stages 511, 512, there is an interconnect 520, marking the transition from switches configured with a single input connectable to one two outputs (1x2) and switches with a single input connectable to one of two outputs (2x1).

Starting from the output of the switch fabric, we can trace which switches are each connected to an output of the mesh. In fourth stage 514 (or first output stage) there is a single switch 524 connected to the first output. In the third stage 513 (or second output stage) there are two switches connected to the switch 524, only one of which will be receiving an optical signal at any given time (depending on the state of switch 524). Similar to group 522, the switches in group 523 are controlled by a single electrical input. In this way, the number of electrical control inputs required to operate an optical switch can be reduced.

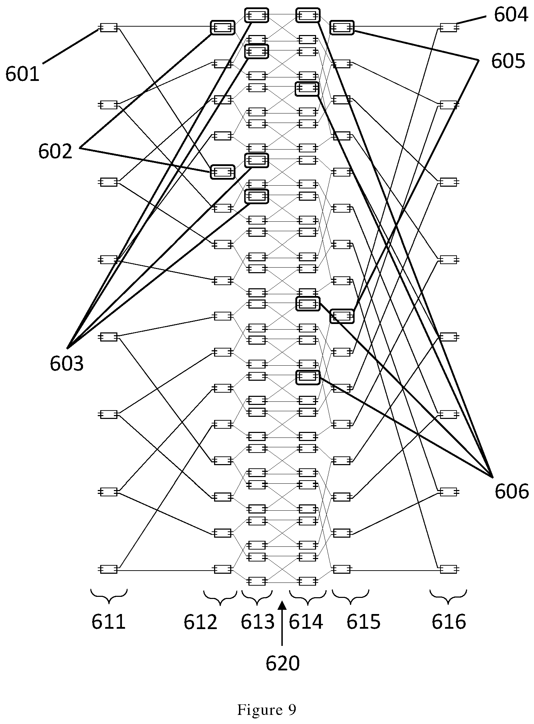

Figure 9 shows an 8x8 dilated Banyan network, comprising six stages 611-616. Input switch 601 in the first stage 611 (or first input stage) is connected to two switches 602 in the second stage 612 (or second input stage). Each of the two switches 602 in the second stage is connected to two switches in the third stage 613. Since there are two switches in group 602, group 603 may be defined consisting of the four switches that are connected to group 602. Following the same approach set out with respect to Figure 8, only one of the switches of the group 602 is receiving an optical signal from the input switch 601 at a given time. Similarly, only one of the switches of the group 603 is receiving an optical signal from group 602 at any given time. It is therefore possible to use a single electrical signal to control all of the switches in group 603, and a single electrical signal to control all the switches in group 602.

Following the interconnect 620, similar groups are defined in the fourth 614, fifth 615 and sixth stage 616 (which may also be termed the third output stage 614, second output stage 615 and first output stage 616). Starting from the output switch 604, two switches 605 can be identified as connected to switch 604 at any given time. Since that is the case, the state of only the switch that is connected to the output switch is important for the state of the switching fabric, and both of switches 605 can be operated using a single electrical signal. Group 606 comprises four switches that are each connected to output switch 604, and all the switches in this group can consequently be controlled with a single electrical signal. In this way, fewer electrical signals can be used to control a switching mesh.

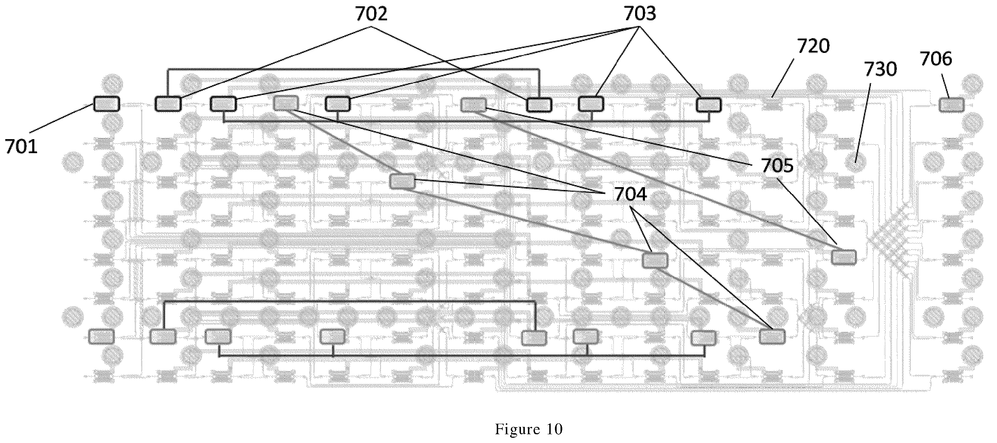

Figure 10 shows a layout of a photonic integrated circuit (PIC) comprising an 8x8 dilated banyan network 700. The programmable unit cells (PUC) 720, each comprising a 1x2 optical switch, are shown, along with contact pads 730 for making electrical connections to the PIC (e.g. by a ball grid array or similar). Each switch comprises an electrically operated element (e.g. an electrothermal phase shifter in a leg of a MZI) which controls the state of the switch in response to an electrical signal.

An input PUC 701 in the first input stage is connected to two PUCs 720 in the second input stage. The two PUCs 720 form a group that is controlled by a single electrical signal (i.e. both are connected to the same drive contact pad 730 for providing the driving electrical signal). The two PUCs in group 720 are each connected to two PUCs in the third input stage forming group 703 of four PUCs. The four PUCs in group 703 are each connected to the same drive contact pad 730 for receiving the driving electrical signal. All the PUCs in group 703 are thereby responsive to a signal applied to the relevant drive contact pad.

Starting from output PUC 706, similar groups 705 and 704 can be defined, having two PUCs and four PUCs respectively.

To avoid a profusion of lines, the drive electrical signal path and the common electrical signal path are not shown in Figures 4 and 6 to 9.

Although example embodiments have been described in which the electrically operated optical elements are phase shifters controlling a state of a switch implemented as a MZI, this is not essential, and the principles described herein can be applied to reduce the number of control inputs in any photonic integrated circuit. For example, the electrically operated optical elements may be arranged to control an amplitude, a phase and/or a polarisation state of an optical path through a photonic integrated circuit. Similar principles can be used to identify electrically operated elements that can be driven with a common electrical signal to reduce the number of electrical connections that are required for a photonic integrated circuit configured for other purposes than as a switch fabric.

The above described examples are not intended to limit the scope of the invention, the scope of which should be determined with reference to the appended claims. Variations encompassed by the claims are within the scope of the invention.

## Claims

1. A photonic integrated circuit, comprising:
electrically operated optical elements, each electrically operated optical element operable to vary a transmission, reflection and/or absorption property of an optical path through the electrically operated optical element in response to an electrical signal received by the electrically operated optical element;
a drive electrical signal path connected to a plurality of the electrically operated optical elements and arranged so that an electrical signal applied to the drive electrical signal path will simultaneously be applied to each of the plurality of the electrically operated optical elements
wherein each of the plurality of electrically operated optical elements is connected to a common electrical signal path, and the drive electrical signal electrical path and common electrical signal path are configured so that an electrical signal applied to the drive electrical signal path will cause:
i) current to flow between the drive electrical signal path and the common electrical signal path via the plurality of electrically operated optical elements; or
ii) an electric field to be applied across at least a portion of each of the plurality of electrically operated optical elements as a result of a first voltage on the drive electrical signal path and a second, different, voltage on the common electrical signal path.

2. The photonic integrated circuit of claim 1, wherein the common electrical signal path is connected to a ground.

3. The photonic integrated circuit of any preceding claim, wherein the drive electrical signal path and the common electrical signal path connects the plurality of electrically operated optical elements in parallel.

4. The photonic integrated circuit of any preceding claim, wherein the drive electrical signal path and the common electrical signal path connects the plurality of electrically operated optical elements in series, or in a hybrid connection mixing both parallel and series connections

5. The photonic integrated circuit of any preceding claim, comprising a plurality of optical switches, each of the plurality of optical switches comprising at least one of the plurality of electrically operated optical elements.

6. The photonic integrated circuit of claim 5, wherein each optical switch comprises a Mach-Zehnder interferometer, and/or, wherein each electrically operated element comprises a thermo-optic phase shifter, an electro-optic phase shifter or an electromechanical phase shifter.

7. The photonic integrated circuit of any preceding claim:
wherein the plurality of electrically operated optical elements is a first plurality of electrically operated optical elements, and the electrical signal is a first electrical signal and the drive electrical path is a first drive electrical signal path; and
the photonic integrated circuit further comprises a second drive electrical signal path connected to a second plurality of the electrically operated optical elements and arranged so that a second electrical signal applied to the second drive electrical signal path will operate each of the second plurality of the electrically operated optical elements.

8. The photonic integrated circuit of claim 7, wherein there are a plurality of drive electrical signal paths, the plurality of drive electrical signal paths comprising the first drive electrical signal path and the second drive electrical signal path, each of the plurality of drive electrical signal paths operating a different set of at least one electrically operated optical elements.

9. The photonic integrated circuit of claim 8, comprising a switching mesh comprising *n* input stages and *m* inputs, wherein:
the ith input stage of the binary-tree switching mesh comprises *m* × 2^{*i*-1} optical switches, each controlled by an electrically operated optical element;
each input stage of the binary-tree switching mesh comprises *m* drive electrical signal paths;
the ith input stage of the binary-tree switching mesh is configured so that each drive electrical signal path controls the operation of 2^{*i*-1} optical switches;
wherein i is counted upwards from 1 adjacent to the input.

10. The photonic integrated circuit of claim 9, wherein the switching mesh further comprises p output stages and *q* outputs, wherein:
the jth output stage of the binary-tree switching mesh comprises q × 2^{*j*-1} optical switches, each controlled by an electrically operated optical element;
each output stage of the binary-tree switching mesh comprises q electrical signal paths;
the jth output stage of the binary-tree switching mesh is configured so that each drive electrical signal path controls the operation of 2^{*j*-1} optical switches;
wherein j is counted upward from 1 adjacent to the output.

11. The photonic integrated circuit of claim 9 or 10, wherein the switching mesh is a binary tree network.

12. The photonic integrated circuit of claim 9 or 10, wherein the switching mesh is a dilated banyan network or a double layer network.

13. A system, comprising the photonic integrated circuit of any preceding claim and a controller configured to:
receive an instruction comprising a desired routing,
identify a relevant switch and a desired state to produce the desired routing,
determine an electrical signal to be applied to the drive electrical signal path to produce the desired state in the relevant switch; and
apply the electrical signal to the drive electrical signal path.

14. The system of claim 13, wherein the controller is configured to determine the electrical signal with reference to a predetermined signal to produce the desired state in an electrically operated optical element that controls the state of the relevant switch; wherein the predetermined signal is at least one of: a voltage, a current, a pulse width modulation, an amplitude modulation.

15. A method of electrically controlling optical elements of a photonic integrated circuit, wherein the optical elements are operable to vary a transmission, reflection and/or absorption property of an optical path through the electrically operated optical element in response to an electrical signal received by the electrically operated optical element, the method comprising:
operating a plurality of the optical elements with a single electrical signal.
